# EUROPEAN PATENT APPLICATION

(11) **EP 4 564 639 A1**
(43) Date of publication of application: **04.06.2025**
(21) Application number: 23213611.9
(22) Date of filing: 01.12.2023
(51) Int. Cl.: H02J 7/00, H02M 7/483

(54) **BATTERY STORAGE SYSTEM WITH BATTERY DEEP DISCHARGE**

(71) Applicant: STABL Energy GmbH, 81379 München (DE)
(72) Inventor: Singer, Arthur, 81379 München (DE); Dietrich, Christoph, 81379 München (DE)
(74) Representative: Lohr, Jöstingmeier & Partner

(57) **Abstract**

A method of operating a battery storage system having at least one multilevel converter with a plurality of battery modules includes the steps of: selecting at least one battery module out of the plurality of battery modules, setting the selected battery module in a bypass state for a specified time interval between 1 second and 30 days or between 5 minutes and 20 days, while maintaining multilevel converter operation, and releasing the selected battery module from the bypass state.

## Description

### Field of the invention

The invention relates to a battery storage system using multilevel converters and to a Method for preparing batteries for recycling by deep discharging the batteries.

### Description of the related art

Batteries and specifically batteries as used in electric vehicles, can release the stored energy within a very short time. In case of a short circuit, very high current may be delivered by the battery leading to overheating and possible fire hazard. Therefore, recycling of batteries requires a specific process to ensure that the batteries are deep discharged and therefore in a low energy state. First, a battery pack may be dismantled and disassembled into individual battery modules or battery cells. Then, the battery modules or battery cells may be discharged, e.g., by submerging them into saltwater having a certain conductivity. There they may stay for multiple days until they are discharged to a safe level. This may be checked before the final recycling process, e.g. shredding and separation of materials may start. Before shredding, the batteries may have to be dried. (starting point for shredding). While the waiting period and manual labor may seem time-consuming, they are necessary steps to prioritize safety and prevent accidents during the recycling process.

US 2013/0234667 A1 discloses an electric energy storage device having an integrated deep discharge device. For discharging the battery, a load is connected by a switch. This requires multiple expensive components including the switch, the load and a cooling system which are only used once at the end of life of the battery.

US 2014/0049230 A1 discloses a battery system having a multilevel converter topology for generating AC signals by switching multiple batteries.

### Summary of the invention

The problem to be solved by the invention is to provide a battery storage system, which simplifies recycling of end-of-life batteries, makes recycling safer and reduces recycling costs. Further, only a minimum of additional hardware should be required which is only used at the end of life of the battery.

Solutions of the problem are described in the independent claims. The dependent claims relate to further improvements of the invention.

In normal battery storage systems, the batteries are in a series connection and all batteries always share the same current, such that they have a similar State of Charge (SOC). With battery storage systems including multilevel converters, battery modules can be used differently. They can be controlled and therefore charged and discharged individually. This is especially important when using so called Second Life Batteries, which are batteries which have been used in a prior application and therefore they are already aged, and they have dissimilar performances and ageing trajectories.

In an embodiment, a method of operating a battery storage system is based on a battery storage system comprising at least one multilevel converter (MLC). Such a multilevel converter includes a plurality of battery modules, where each of the plurality of battery modules includes at least one battery (cell) and preferably multiple batteries. The at least one multilevel converter is configured for multilevel converter operation (MLC operation) including at least one of delivering electrical power by discharging at least one battery and/or receiving electrical power by charging at least one battery. In MLC operation, the multilevel converter may provide a variable DC or an AC output voltage. It may also be charged with a DC or AC voltage. The output voltage may be set at any time by connecting a number of battery modules required for the voltage. This also includes that for short periods of time, e.g., when a sine wave passes zero, no battery module may be connected, and such no battery is charged or discharged. The electrical power may be delivered to a load, e.g., a power grid, battery, motor, or current consumer. Further, the electrical power may be received from a source, e.g., power grid, battery, motor/generator, or power plant. More details of such a battery storage system are specified below.

The method provides deep discharging of at least one selected battery module during MLC operation of the multilevel converter. The at least one selected battery module may include an end-of-life battery, which may have reached its end of life. After reaching the deep discharge state, the battery module may be deactivated, such that it is no more included in MLC operation and can be removed from the battery storage system. It may further be replaced by another, e.g., a new battery module.

Normally, Batteries are operated in their safe operating area (SOA), in which state of charge values (SOC) are defined. A battery having an SOC of 0%, is empty. It can no longer provide any power and must be charged. With an SOC of 100%, the battery is full. It must be discharged and can no longer be charged. Normally, batteries may be operated within SOC values between 0 and 100%. With a 0% SOC the battery has a safety discharge voltage, which may be 2,5V for a typical NMC Lithium-Ion battery. With a SOC of 100% the battery has a safety charge voltage, which may be 4,2V. Below the SOA and therefore, below the safety discharge voltage, the battery is in a critical state, in which it must not be used and has to be charged immediately. There are no SOC values defined for this state. Here, a reliable SOC estimation is not possible, such that the battery state is normally defined by the battery voltage. If the battery voltage drops further below an absolute safety discharge voltage, which may be 1,5V, the battery cannot be used anymore as dendrites may grow, which permanently destroy the battery. A battery in this state may be considered as deep discharged.

A method is based on a State of Charge (SOC) value which determines the relative charge of a battery module with 0% indicating a completely discharged battery and 100% indicating a fully charged battery. The SOC is only defined inside of the safe operating area (SOA). Deep discharging a battery would lead the battery outside of this SOA and therefore to a (undefined) negative SOC.

The method is performed in a battery storage system comprising at least one multilevel converter. The at least one multilevel converter being configured for multilevel converter operation including cycles with at least one of delivering electrical power by discharging at least one battery and/or receiving electrical power by charging at least one battery. The method comprises at least the steps of:
a) selecting at least one battery module out of the plurality of battery modules for deep discharging,
b) during operation of the battery storage system, reducing the charge of the at least one selected battery module until the at least one selected battery module reaches a deep discharge state,
c) excluding the deep discharged selected battery module from multilevel converter operation.

In another method, following step a), the following steps are performed:
b) reducing the charge of the at least one selected battery module until the at least one selected battery module reaches a SOC value of <5% or <1% or 0%, while maintaining multilevel converter operation,
c) further reducing the charge of the at least one selected battery module until the at least one selected battery module reaches a minimum charge, while maintaining multilevel converter mode,
d) excluding the deep discharged selected battery module (205) from multilevel converter operation.

Another optional step may be:
e) reducing the charge of the at least one selected battery module (205) until the at least one selected battery module (205) reaches a deep discharge state.

In a normal MLC based battery system, all batteries may be held at a similar SOC. If the battery system is charged, the SOC of all batteries increases, while the SOC decreases during discharge. A balancing algorithm or system may take care that all batteries have the same or at least a similar SOC. This may be independent of the actual battery capacity.

In an embodiment, the SOC of the selected battery module may decrease when the selected battery module receives less charging energy and/or delivers more energy to a load than the other battery modules. The SOC of the selected battery module may decrease to a very low level, which may be zero or close to zero (SOC value <5% or <1% or 0%). This is shortly before deep discharge and may also be considered as deep discharge. The process of discharging may be done within a period of < 1 week or < 48 hours, or < 24 hours or < 12 hours or <6 hours or <3 hours. Further, the discharge time may be set such that the battery module is discharged until a given point of time, e.g., when a system maintenance is due.

Once a battery module is deep discharged, it can no more be used in the battery storage system out of safety reasons. The multilevel converter normally may no more charge or discharge such a battery module. Therefore, it may be deactivated which may include a permanent disconnection and/or blocking of the multilevel converter operation, e.g., charging and discharging. This may be done by permanently setting a bypass switch for the selected battery module to on (closing the bypassswitch) and optionally a series switch to off. Here, a bypass switch would bypass any current to the battery module such that no current can flow in and out from the battery module, such that the battery module is disconnected at least in a logical sense.

In an embodiment, the management of the battery storage system uses a SOC value as setpoint for operating the battery modules. Here, simply a zero or very low number (<5% or <1% or 0%) may be set as setpoint for SOC of the selected battery. The battery system will then operate the selected battery under such conditions that the SOC goes down to zero or close to zero. The method may include reducing the SOC setpoint continuously, e.g., within a period of < 1 week or < 48 hours, or < 24 hours or < 12 hours or <6 hours or <3 hours. Further, the method may include reducing the SOC linearly.

To avoid a very quick discharge of the selected battery, which may result in high power dissipation and therefore heating up of the selected battery, the SOC setpoint for the selected battery may ramp down or follow a predetermined function (or curve), which reduces power dissipation. For example, with lower SOC values the SOC may decrease slower, resulting in a lower load, which reduces power dissipation by losses caused due to an increasing internal resistance with lower SOC.

In another embodiment, the selected battery module may only be discharged during MLC operation like the other battery modules in the battery storage system, but it may no more be charged or only charged at a lower rate than the other battery modules. Therefore, the selected battery module may be excluded from charging cycles. If, for example, it would be charged with a lower number of charging cycles receiving a lower charge than the other battery modules, but discharged like the other battery modules, the SOC would slowly decrease until the selected battery module is deep discharged. To limit the power dissipation and to avoid overheating of the battery module, the discharge current and/or on-times may be limited.

With lower SOC values the internal resistance (impedance) of the battery modules increases, such that the battery modules can no longer deliver the full current at their rated output voltage. Therefore, the selected battery module, when having a low SOC (SOC value <5% or <1% or 0%.), may preferably be used where low current values are required, e.g., near zero crossing of a sinusoidal output current. A minimum charge state of step c) may have an undefined SOC as it is below 0. Here, a battery voltage may be used to determine this state of minimum charge. A minimum charge may be reached, when a predetermined voltage with a SOC below 0 (or undefined) is reached and/or a multilevel converter operation is no more possible. This may be the case, if the battery module can no more deliver a minimum current which is required for low multilevel converter output voltages, e.g., close to zero crossing of the output voltage.

In an embodiment, after excluding the deep discharged selected battery module from multilevel converter operation, a battery management system (BMS) of the deep discharged selected battery module is configured to draw further current from the battery module and optionally to draw a higher current than normal from the battery module to accelerate discharge. Normally, a BMS switches itself off or goes into a minimum power state, when a SOC value of 0 or a distinct (low) voltage setpoint is reached to avoid further discharge and possible damage of the battery module. Here, the BMS is intentionally configured to further discharge the battery.

An embodiment relates to a battery management system (BMS), which can be configured to draw further current from the battery module and optionally to draw a higher current than normal from the battery module to accelerate discharge of the battery module, even if the battery module has a SOC value of 0 or below. The BMS may be configured to receive a special command, which may be secured by a key to enter this mode. This may prevent unintentional activation of the mode.Even if the battery modules have been deep discharged it will regenerate a bit of its voltage such that the voltage will rise again as long as the battery modules are not being used. To counteract this effect, the battery modules may be put into operation again and/or further discharged. It may be sufficient to use the battery modules only for short periods of time, e.g., a few seconds or minutes, but less than 1 hour. This may be repeated, e.g., periodically, maybe once per day or week until the battery module is taken out of the system. A scheduler may trigger such use periods.

As the impedance of the battery strongly rises when it is deep discharged, the voltage (in the exponential zone) is unstable, e.g., a small current already lets the battery voltage drop significantly. This makes it difficult to use the battery module at a very low SOC level for normal operation.

At a very low SOC (in the range of 0% and preferably <5% since SOC estimators are not very precise) also the battery module cell balancing may be activated. Via the balancing resistors the cells are subject to a comparatively small discharge current all the time. This counteracts the voltage rising and emulates the submersion in saltwater to constantly discharge them. This discharge might stop when the battery voltage is too low to be measured by or to power the BMS analog front end anymore, but it will start up again, if the battery voltage rises again.

The low voltage can be additionally checked via a voltage measurement of the modular multilevel module.

Another alternative may be to short circuit the battery module by permanently or for longer periods closing the series switch and the bypass switch.

The method allows for a specific deep discharging of a battery in a selected battery module without affecting normal operation of the multilevel converter (MLC). Therefore, the MLC may switch any required number of batteries together to dynamically obtain a required output voltage and/or current, which may e.g., have a sine wave. Whereas the MLC operation includes charging and discharging of the batteries. This works as long as the voltage of the remaining number of battery modules is high enough to provide a required voltage and/or current. The method may be performed at the same time for multiple selected battery modules, as long as the number of remaining battery modules is sufficient for generating the maximum required output voltage. After deep discharging of a battery module, this battery module will be excluded from MLC operation, e.g., the bypass switch will be permanently on.

Most battery management systems have a deep discharge prevention algorithm (or logic) to avoid damaging of battery cells due to deep discharge. This safety algorithm may be disabled before the method is executed or at least when the SOC goes to very low values. Further, a safety mechanism or algorithm may be triggered, once the battery module has reached a state of deep discharge, to prevent that the battery module is ever used again.

The selection of a battery module for deep discharging may be triggered manually by an operator or from a cloud service based on at least one of: SOH of the battery module, upcoming maintenance intervals, lifetime, stock of better batteries available or capacity information from a recycler.

Batteries and therefore also battery modules are subject to parameter drifts due to ageing and temperature. To compensate for this, battery management systems have been used up to now to balance the charge levels. Further, air conditioning was used to equalize the temperature distribution in a rack. Balancing is lossy and therefore poor, and perfect temperature distribution cannot be achieved for physical reasons. A multilevel converter allows for dealing with these parameter drifts by different ways, as it can load the battery modules (or even individual batteries or cells) differently during operation. With a modular multilevel inverter, it is possible to subject battery modules to different current or power profiles in order to achieve not only an equalization of the SOC, but also an equalization of the temperature. Furthermore, it would be possible (when using different cells/modules in terms of age, chemistry, type, etc.) to use the cells according to their preferred load. For example, high-power cells could be activated primarily for current peaks or in the middle of sine waves, while the high-energy cells could be used to ensure that they see as even a current load as possible.

In an embodiment, e.g., if a battery module/cell is already significantly aged, to precisely use this module/cell to run down demanding profiles. In this way, a module that is already weakened can be sacrificed to protect higher-value modules. It is also possible to conserve certain modules, for example if they are new and are only cycled so that they barely age and are then used later in a car or similar by only using them at low currents or only rarely during the day, e.g., for rare peak loads or in emergencies. Heuristics may be used to use modules differently according to certain parameters (i.e., essentially measurements or estimates of parameters).

For performing the method above, a battery module may include a battery, a series switch configured to connect or disconnect the battery within the battery module, and a parallel switch configured to bypass the battery module when closed. Further, the battery module may be configured for a connected state where the series switch is open, and the parallel switch is closed, and a bypass state, where the series switch is open, and the parallel switch is closed. If both switches are open, the battery module is in an open state. There may be a higher number of switches, which may provide further switching states (e.g., a state which allows one battery to be connected in parallel with another battery). A battery may include one or more battery cells. For high power applications groups of battery cells may be connected in series (e.g., hard-wired) to have a higher voltage. The battery module may also include a battery management system (BMS). Such a BMS may include means for balancing the battery cells inside the battery module. Such means may be switchable resistors or DCDC regulators. Further, the BMS may include means for measuring battery parameters, like voltage, current, temperature and/or calculating and/or estimating parameters like state of charge (SOC) and state of health (SOH). Further, the BMS may include an interface to communicate with an external device, which may be a controller, e.g., a master controller, string controller or module controller.

An integer number of N with N >=2 battery modules may be connected to a string. A battery storage system may comprise at least one string. Further, an integer number M with M >=2 strings may be connected together. Individual strings may have individual numbers N1, N2, N3, ... of modules. The strings may be connected together by a parallel circuit. A string may include an inductor and/or a diode to improve current distribution and/or to avoid unwanted currents flowing between strings. An inductor may improve current control of a string as the current may be controlled by pulse width modulation (PWM) switching between the connected and open states of a string. The inductor may also include connecting cables of sufficient length. The battery storage system may be configured for delivering a DC voltage to a load. It may also be configured for delivering an AC voltage by approximating a sinusoidal or any other waveform by switching varying numbers of battery modules in a connected state.

The battery storage system may be configured to perform at least one of the methods described in this document.

A string may be configured to provide balancing of its battery modules during charging and discharging cycles. Normally, the number N of battery modules within a string is selected, such that the string may provide a higher output voltage than its nominal output voltage. Therefore, normally, not all battery modules are required to each provide a nominal output voltage and not all battery modules are in a connected state. The remaining battery modules are in a bypass state and do not deliver power, such that only the batteries of the connected battery modules will be discharged while the batteries of the modules in bypass state keep their charge. For balancing the battery modules, over time, the battery modules in a string may be configured to different states, e.g., from connected state to bypass state or from bypass state to connected state, such that all batteries are discharged to a common power state, e.g., state of charge. The battery storage system may be configured to select within a string over multiple periods of time/and or time intervals different combinations of battery modules for a connected state while the remaining battery modules are in a bypass state. During discharging of the battery storage system, at least one of the battery modules with a higher power state may have longer times in a connected state than at least one of the battery modules with a lower power state.

Basically, the same applies if the battery modules of a string are charged. Here, the states of the battery modules may be exchanged from time to time such that all battery modules have a similar or the same power state. During charging of the battery storage system, at least one of the battery modules with a lower power state may have longer times in a connected state than at least one of the battery modules with a higher power state.

### Description of Drawings

In the following the invention will be described by way of example, without limitation of the general inventive concept, on examples of embodiment with reference to the drawings.
Fig. 1 shows a circuit diagram of an embodiment.
Fig. 2 shows a block diagram of a battery storage system.
Fig. 3 shows details of a battery module.
Fig. 4 shows an open switching state of battery modules in detail.
Fig. 5 shows a connected switching state of battery modules in detail.
Fig. 6 shows a bypass switching state of battery modules in detail.
Fig. 7 shows a flow diagram of a method.
Fig. 8 shows SOC values over time.
Fig. 9 shows different discharge curves.
Fig. 10 shows a voltage over SOC curve.

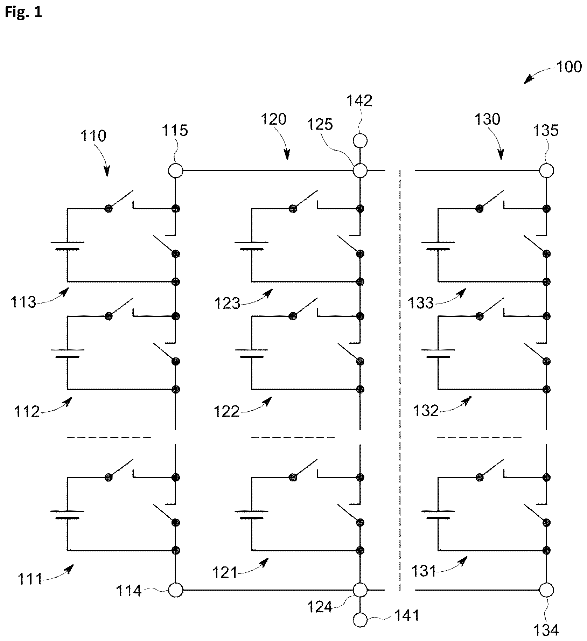

Fig. 1 shows a circuit diagram of an embodiment of a battery storage system 100. The battery storage system 100 includes a plurality of strings of battery modules. This figure shows three strings 110, 120, 130 which are connected in parallel. There may also be two strings or any higher number of strings.

Each string of battery modules 110, 120, 130 includes a plurality of battery modules which may be connected in series. Herein, exemplary three battery modules are shown. Instead, there may be at least two battery modules and any higher number of battery modules. Each battery module may include at least a battery, one switch for disconnecting the battery and another switch for bridging the battery module. In this figure, a first string 110 includes three battery modules 111, 112, 113 which are connected in series. The first string may have a first connector 114 connected to the first battery module 111 and a second connector 115 connected to the last battery module of the string which is the third battery module 113 in this embodiment. The same applies to the second string 120 including battery modules 121, 122 and 123 which are connected to a first connector 124 of second string and a second connector 125 of second string. The third string 130 includes battery modules 131, 132 and 133 which are connected to first connector 134 of third string and second connector 135 of third string.

The first connectors 114, 124 and 134 may be connected together to a common first battery storage system connector. Further, the second connectors 115, 125 and 135 may also be connected together to a second battery system connector 142. In this embodiment, the battery storage system 100 may deliver power at the first battery system connector 141 and the second battery system connector 142. The battery storage system 100 may also be charged through these connectors.

Each string may be configured to provide different output voltages by connecting any number of batteries in series. If no battery is connected, then the output voltage may be zero. There may also be a high impedance, if at least one battery module is in an open state.

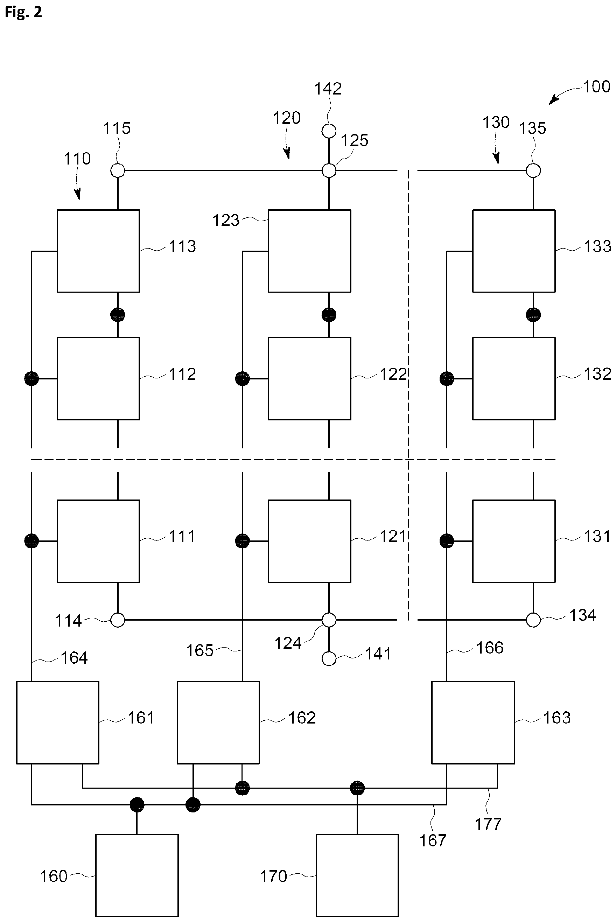

Fig. 2 shows a block diagram of a battery storage system 100. The individual battery modules are shown as blocks. Further, control means are shown. A first string controller 161 may control via a control bus 164 the battery modules of the first string 111, 112 and 113. As the individual battery modules of a string may be on varying potentials depending on the switching states of the battery modules, there must be an isolation to the bus. This may be done by isolated bus couplers in the battery modules. Alternatively, individual isolated bus lines may be provided between a string controller and the battery modules of a string.

String 2 is controlled by second string controller 162 via second control bus 165 and string 3 is controlled by third string controller 163 via third control bus 166.

The string controllers may be controlled by a master controller 160 via a master control bus 167. Alternatively, there may be a single controller including the functions of master controller and string controllers. A plurality of individual string controllers which may operate independently, and which further may operate autonomously may increase the reliability of the system. In the case, the master controller would fail, the individual string controllers may revert to a previous configuration or to a standard failsafe configuration. The module controllers and/or the master controller form a controller structure.

There may also be a backup master controller 170 which may communicate with the string controllers via a backup master control bus 177. There may also be backup string controllers and/or a backup control bus within the strings.

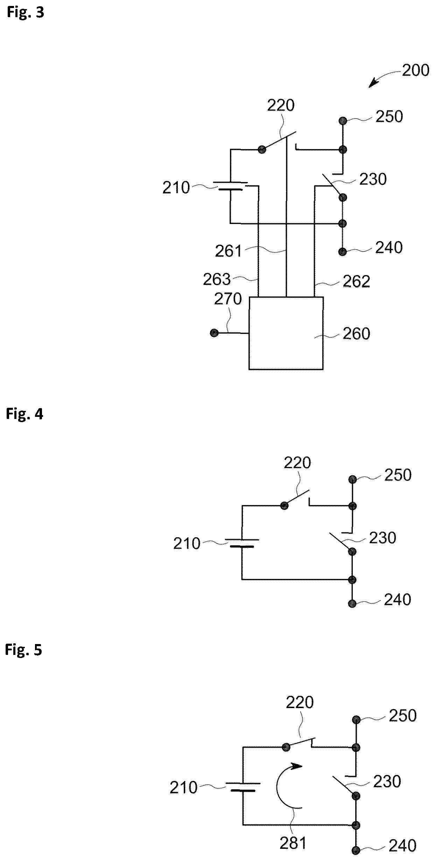

Fig. 3 shows details of a battery module 200. Each of the previously shown individual battery modules 111-113, 121-123 and 131-133 may have the same or a similar structure. A battery module 200 may include a battery 210. Such a battery may be any source of electrical DC power. Normally, such a battery may be based on a rechargeable technology, like LiPo, LiFe, Li-Ion, NiCd, NiMH or Sodium-ion. It may also include a fuel cell or solid state battery. The battery module 200 may further include a series switch 220 which may be connected in series to the battery, and which may be configured to connect or to disconnect the battery for providing a disconnected state in which the battery is isolated from other batteries. If the series switch 220 is closed, the battery is in a connected state. The battery 210 together with the series switch 220 may be connected between a first module connector 240 and a second module connector 250. In the embodiment shown, the positive pole (+) of a battery is connected to the second module connector 250 whereas the negative (-) pole of a battery is connected to the first module connector 240. There may further be a parallel switch 230 which may also be connected between the first module connector 240 and the second module connector 250. The parallel switch 230 may be configured to provide a short-circuit between the first module connector 240 and the second module connector 250 in a closed state which is called the bypass state herein. When the parallel switch 230 is closed, the series switch 220 may be opened to avoid a short-circuit of the battery. The battery module 200 may further be configured to provide an open state, where the series switch 220 and the parallel switch 230 are open. In such a state, no current can flow through the battery module and therefore through the string in which the battery module is integrated. This means, that the string is disconnected from the other strings in the battery storage system.

Summarizing, there may be three different states of the battery storage system 100, a connected state, a bypass state, and an open state.

For controlling the switches, a module controller 260 may be provided. This module controller 260 may control the series switch 220 via a series switch control line 261. It may further control the parallel switch 230 by a parallel switch control line 262. There may also be a battery signal line or a bus 263 for receiving battery parameters like battery temperature, battery voltage, battery current or state of charge or state of health. Based on these parameters, the module controller may control the switches. The battery module may also include a battery management system (BMS). Such a BMS may include means for balancing the battery cells of the battery module. Such means may be switchable resistors. Further, the BMS may include means for measuring battery parameters, like voltage, current, temperature and/or calculating and/or estimating parameters like state of charge (SOC) and state of health (SOH). Further, the BMS may include an interface to communicate with an external device, which may be a controller, e.g., a master controller, string controller or module controller. The BMS may be configured to balance and/or to discharge individual battery cells.

The module controller 260 may be connected by a bus connector 270 to a control bus of a string controller. The module controller may receive commands for controlling the switch from the string controller and may forward status information of switches and/or battery to the string controller.

Fig. 4 shows an open switching state of battery modules in detail. The series switch 220 and the parallel switch 230 are open.

Fig. 5 shows a connected switching state of battery modules in detail. The series switch 220 is closed and the parallel switch 230 is open. This allows current to flow in direction 281 if the battery is discharged. For charging the battery, the current is flowing in an opposite direction.

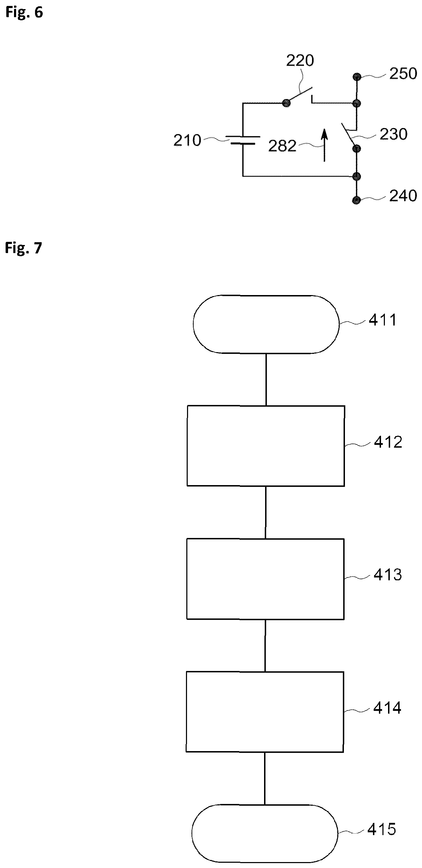

Fig. 6 shows a bypass switching state of battery modules in detail. The series switch 220 is open and the parallel switch 230 is closed. This may allow current to flow in a direction 282 or opposite thereto.

Fig. 7 shows a flow diagram of a method. The method starts in 411.

The first step 412 is selecting at least one battery module out of the plurality of battery modules for deep discharging,

The second step 413 is reducing the state of charge (SOC) of the at least one selected battery module until the at least one selected battery module reaches a deep discharge state, while maintaining multilevel converter operation.

The third step 414 is excluding the deep discharged selected battery module from multilevel converter operation.

The method ends in 415.

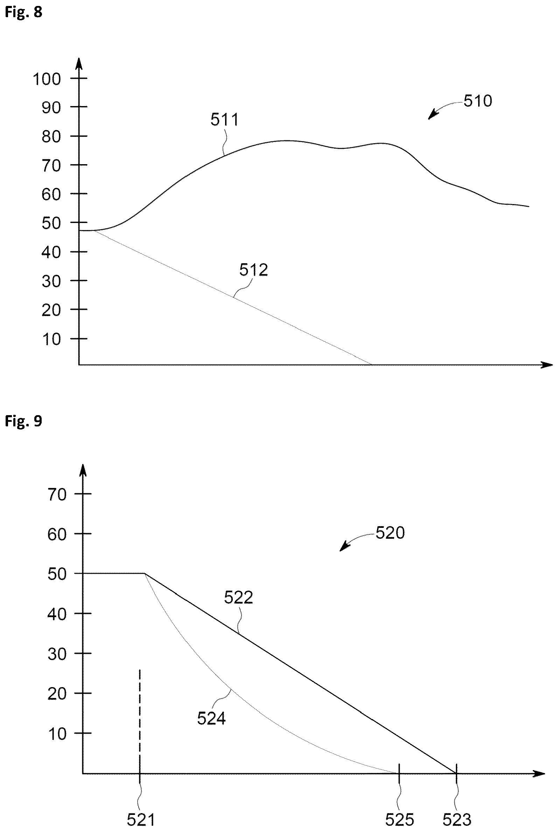

Fig. 8 shows a diagram 510 with state of charge (SOC) values in % over time. The time scale is arbitrary. The horizontal axis indicates the time while the vertical axis indicates SOC. Normally, all battery modules in a battery storage system may have the same SOC 511, which varies during operation of the battery storage system. It increases when the battery modules are charged and decreases when the battery modules are discharged. According to a method, the SOC 512 of a selected battery module decreases over time until the battery is deep discharged with a SOC close to 0 or 0.

Fig. 9 shows a diagram 520 with state of charge (SOC) values in % over time for different discharge curves. The horizontal axis indicates the time while the vertical axis indicates SOC. The curves start at the same start time 521. A SOC of linear discharge 522 decreases linearly to 0 at time 523 of deep discharge. A SOC of nonlinear discharge 524 starts with a steep decrease of SOH values and has a slower decrease with lower SOC values, as battery modules with lower charge may have a higher internal resistance.

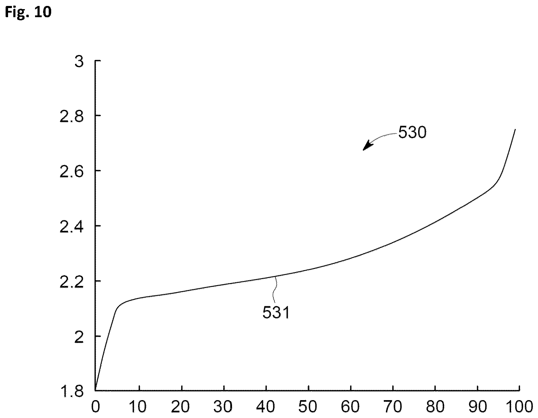

Fig. 10 shows a diagram 530 with the voltage over SOC curve 531 of an exemplary battery. The horizontal axis indicates SOC values in % and the vertical axis indicates the battery voltage in Volts. At low SOC values, here about below 10%, the battery voltage drops quickly with further decreasing SOC values. This makes normal multilevel converter operation difficult. Here, the battery module may be used at output voltages of the battery storage system close to 0 with currents close to 0. Further, this may be done only for short periods of time with longer breaks in between which allow the battery module to regenerate. Further, a cell balancing internal to the battery module may be activated. This is normally controlled by the BMS (battery management system) of a battery module. The cell balancing draws small current through resistors, which consumes the remaining energy of a battery over time.

### List of reference numerals

- 100: battery storage system
- 110: first string
- 111- 113: battery modules of first string
- 114: first connector of first string
- 115: second connector of first string
- 120: second string
- 121 - 123: battery modules of second string
- 124: first connector of second string
- 125: second connector of second string
- 130: third string
- 131 - 133: battery modules of third string
- 134: first connector of third string
- 135: second connector of third string
- 141: first battery system connector
- 142: second battery system connector
- 150: communication bus
- 160: master controller
- 161: first string controller
- 162: second string controller
- 163: third string controller
- 164: first control bus
- 165: second control bus
- 166: third control bus
- 167: master control bus
- 170: backup master controller
- 177: backup master control bus
- 200: battery module
- 205: selected battery module
- 210: battery
- 220: series switch
- 230: parallel switch
- 240: first module connector
- 250: second module connector
- 260: module controller
- 261: series switch control line
- 262: parallel switch control line
- 263: battery signal line
- 270: bus connector
- 281: current direction - battery connected
- 282: current direction - short circuit
- 411-415: method steps
- 510: SOC curve over time
- 511: SOC of all normal battery modules
- 512: SOC 512 of a selected battery module
- 520: Different SOC curves over time
- 521: start time
- 522: SOC of linear discharge
- 523: time of deep discharge for curve 522
- 524: SOC of nonlinear discharge
- 525: time of deep discharge for curve 524
- 530: diagram of battery voltage over SOC
- 531: voltage over SOC curve

## Claims

1. A method of operating a battery storage system comprising at least one multilevel converter (110),
the at least one multilevel converter (110) comprising a plurality of battery modules (200),
each of the plurality of battery modules comprising at least one battery (210),
the at least one multilevel converter (110) being configured for multilevel converter operation including cycles with at least one of delivering electrical power by discharging at least one battery (210) and/or receiving electrical power by charging at least one battery (210),
the method comprising the steps of:
a) selecting at least one battery module (200) out of the plurality of battery modules for deep discharging,
b) reducing the charge of the at least one selected battery module (205) until the at least one selected battery module (205) reaches a deep discharge state, while maintaining multilevel converter mode,
c) excluding the deep discharged selected battery module (205) from multilevel converter operation.

2. A method of operating a battery storage system comprising at least one multilevel converter (110),
the at least one multilevel converter (110) comprising a plurality of battery modules (200),
each of the plurality of battery modules comprising at least one battery (210),
the at least one multilevel converter (110) being configured for multilevel converter operation including cycles with at least one of delivering electrical power by discharging at least one battery (210) and/or receiving electrical power by charging at least one battery (210),
the method comprising the steps of:
a) selecting at least one battery module (200) out of the plurality of battery modules for deep discharging,
b) reducing the charge of the at least one selected battery module (205) until the at least one selected battery module (205) reaches a SOC value of <5% or <1% or 0%, while maintaining multilevel converter mode,
c) further reducing the charge of the at least one selected battery module (205) until the at least one selected battery module (205) reaches a minimum charge, while maintaining multilevel converter mode,
d) excluding the deep discharged selected battery module (205) from multilevel converter operation,

3. A method according to claim 2, the method comprising:
in step b) performing the steps of:
b1) configuring the management of the battery storage system for a SOC setpoint for the at least one selected battery module (205) having a SOC value <5% or <1% or 0%,
b2) reducing the charge of the at least one selected battery module (205) until the at least one selected battery module (205) reaches the SOC setpoint, while maintaining multilevel converter mode.

4. A method according to claim 2 or 3, the method comprising:
after step d) performing the step of:
e) reducing the charge of the at least one selected battery module (205) until the at least one selected battery module (205) reaches a deep discharge state.

5. A method according to any of the previous claims, the method comprising:
in step b) continuously reducing the charge of the at least one selected battery module (205), preferably within a period of < 1 week or < 48 hours, or < 24 hours or < 12 hours or <6 hours or <3 hours.

6. A method according to any of the previous claims, the method comprising:
in step b) linearly reducing the charge of the at least one selected battery module (205) or decreasing the rate of reducing the charge with time or defining the rate of reducing the charge by a predetermined function.

7. A method according to any of the previous claims, the method comprising:
in step b) reducing the charge of the at least one selected battery module (205) by excluding it from charging cycles.

8. A method according to any of the previous claims, the method comprising:
in step b) using the at least one selected battery module (205) when having a SOC value < 10% or <5% or <1% or 0% where low current values are required, and/or near zero crossing of a sinusoidal output current.

9. A method according to any of the previous claims, the method comprising:
after excluding the deep discharged selected battery module (205) from multilevel converter operation:
permanently disconnecting the deep discharged selected battery module (205), e.g., by permanently setting a bypass switch for the selected battery module (205) to on and optionally a series switch to off
and/or
further discharging the deep discharged selected battery module (205), for at least one period of time less than 1 hour.

10. A method according to any of the previous claims, the method comprising:
after excluding the deep discharged selected battery module (205) from multilevel converter operation:
configuring a battery management system of the deep discharged selected battery module to draw further current from the battery module and optionally to draw a higher current than normal from the battery module to accelerate discharge.

11. A method according to any of the previous claims, wherein:
in a deep discharge state, the at least one selected battery module (205) has a voltage below a safety discharge voltage.

12. A method according to any of the previous claims,
**characterized in, that**
the method is performed at the same time for multiple selected battery modules (205).

13. A method according to any of the previous claims, wherein the battery modules (200) comprise:
- a battery (210),
- a series switch (220) configured to connect or disconnect the battery (200) within the battery module, and
- a parallel switch (230) configured to bypass the battery module (200) when closed,
and wherein the battery modules (200) can be configured for:
- a connected state where the series switch (220) is closed, and the parallel switch (230) is open,
- a bypass state, where the series switch (220) is open, and the parallel switch (230) is closed.

14. A battery storage system (100) comprising at least one multilevel converter (110), the at least one multilevel converter (110) further comprising a plurality of battery modules (200), each battery module (200) includes at least:
- a battery (210),
- a series switch (220) configured to connect or disconnect the battery (200) within the battery module, and
- a parallel switch (230) configured to bypass the battery module (200) when closed,
wherein each battery module (200) can be configured for:
- a connected state where the series switch (220) is closed, and the parallel switch (230) is open,
- a bypass state, where the series switch (220) is open, and the parallel switch (230) is closed,
- an optional open state where the series switch (220) and the parallel switch (230) are open, and
wherein the battery storage system (100) and/or the at least one multilevel converter (110) is configured for performing a method according to any of the previous claims.

15. A battery management system which can be configured to draw further current from the battery module and optionally to draw a higher current than normal from the battery module to accelerate discharge of the battery module, even if the battery module has a SOC value of 0 or below.
